Europäisches Patentamt

European Patent Office

Office européen des brevets

(11) Publication number: **0 173 266**
**A2**

# EUROPEAN PATENT APPLICATION

(21) Application number: 85110621.1

(22) Date of filing: 23.08.85

(51) Int. Cl.⁴: **G 02 B 6/00**

(30) Priority: 24.08.84 JP 177172/84
24.08.84 JP 177173/84
24.08.84 JP 177174/84
24.08.84 JP 177175/84

(43) Date of publication of application: 05.03.86
**Bulletin 86/10**

(84) Designated Contracting States: DE FR GB

(71) Applicant: **SUMITOMO ELECTRIC INDUSTRIES LIMITED, No. 15, Kitahama 5-chome Higashi-ku, Osaka-shi Osaka 541 (JP)**

(72) Inventor: **Niwa, Shinichiro c/o Osaka Works, Sumitomo Electric Ind., Ltd. 1-3, Shimaya 1-chome, Konohana-ku Osaka-shi Osaka-fu (JP)**
Inventor: **Nishimura, Akira c/o Osaka Works, Sumitomo Electric Ind., Ltd. 1-3, Shimaya 1-chome, Konohana-ku Osaka-shi Osaka-fu (JP)**
Inventor: **Shibata, Yutaka c/o Osaka Works, Sumitomo Electric Ind., Ltd. 1-3, Shimaya 1-chome, Konohana-ku Osaka-shi Osaka-fu (JP)**
Inventor: **Osawa, Yoshitaka c/o Osaka Works, Sumitomo Electric Ind., Ltd. 1-3, Shimaya 1-chome, Konohana-ku Osaka-shi Osaka-fu (JP)**

(74) Representative: **Hansen, Bernd, Dr.rer.nat. et al, Hoffmann, Eitle & Partner Patentanwälte Arabellastrasse 4, D-8000 München 81 (DE)**

(54) Composite optical waveguide and production of the same.

(57) A composite optical waveguide comprising a flexible tube member (10) having at least one continuous bore along at least a part of its length at least one of which is filled with a transparent elastomeric material (11) serving as an optical waveguide part, which optionally further comprises at least one elongate element (31, 32) embedded in the transparent material or a wall of the tube member (10).

Composite Optical Waveguide and Production of the Same

Field of the Invention

The present invention relates to a composite optical waveguide and production of the same and to catheters comprising such a waveguide.

Background of the Invention

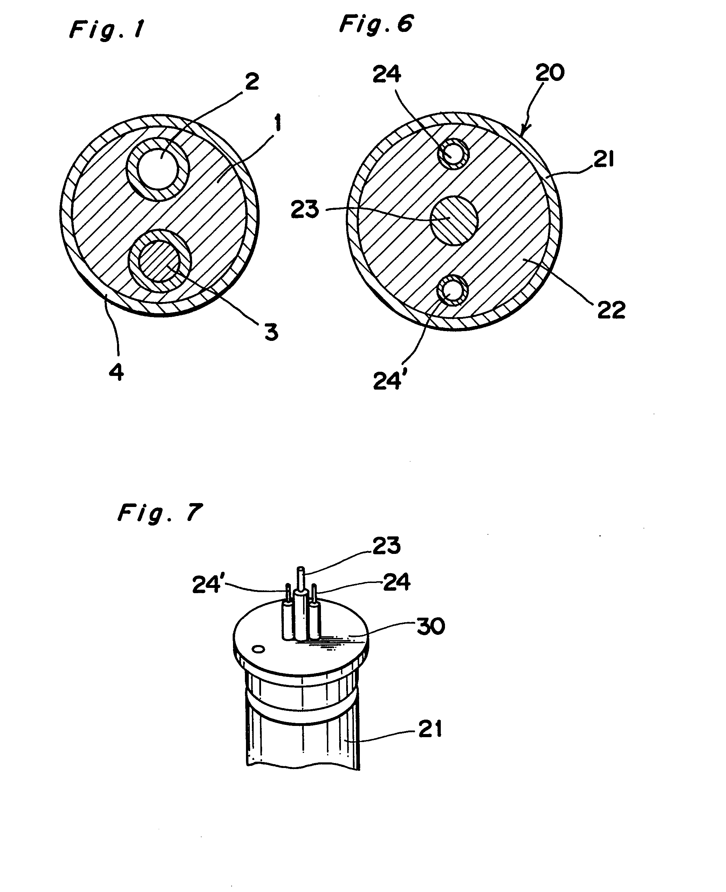

Although an optical waveguide is often used alone as an optical fiber, it sometimes forms a composite waveguide together with other elongate elements having other functions such as a tube for transportation of a fluid and a rod-like element (e.g., an electric wire and an image fiber). When a cross sectional area in which light is propagated is designed to be larger in the composite waveguide, as shown in Fig. 1 of the accompanying drawings, a tube 2 and a rod 3 are preferably embedded in a transparent material 1 which is surrounded by a flexible tube member 4. In such a structure, preferably the outer surface of each elongate element and the inner surface of the flexible tube member have a smaller refractive index than that of the transparent material to prevent absorption loss of light at the interfaces between the tube 2, the rod 3 or the flexible tube member 4 and the transparent material 1.

The composite optical waveguide comprising a conventional synthetic material (e.g., polymethyl methacrylate) as the transparent material is produced by one of following methods:

A first method comprises extruding the elongate element together with the transparent material. This method requires the elongate element to be tough enough to resist the extrusion conditions. Thus, in this method, kinds of applicable materials are restricted by their properties such as mechanical strength, an extruding temperature and so forth.

A second method comprises extruding a transparent material in the form of a tube member having a bore in which the elongate element is inserted, providing the outer surface of the transparent material with a cladding and then inserting the elongate element in the bore. However, this method has poor productivity since the elongate element is inserted in a narrow bore after the transparent material is extruded. In addition, a gap tends to be left between the elongate element and the transparent material.

It has been known for a long time to use an elastomeric material as an optical waveguide. For example, Jap. J. of Appl. Phys., 10, 1597 (1971) describes a silicone elastomer as a flexible optical waveguide. Japanese Patent Kokai Publication (unexamined) No. 150139/1979 describes a cladded rod for propagating light comprising a core and a cladding at least one of which is made of an elastomeric material.

## SUMMARY OF THE INVENTION

One object of the present invention is to provide a composite optical waveguide which can be produced by a simple method.

Another object of the present invention is to provide a composite waveguide comprising a waveguide part made of a transparent material and at least one elongate element, namely a tube or a rod-like element.

Further object of the present invention is to provide a composite optical waveguide comprising a flexible tube member having at least one continuous bore along at least a part of its length, at least one of which is filled with an transparent elastomeric material serving as an optical waveguide part and at least one elongate element embedded in the transparent material wherein any gap is not formed between the transparent material and the embedded elongate element.

According to one aspect of the invention, there is provided a composite optical waveguide comprising a flexible tube member having at least one continuous bore along at least a part of its length, at least one of which is filled with a transparent elastomeric material serving as an optical waveguide part.

## BRIEF DESCRIPTION OF THE DRAWINGS

Fig. 1 is a cross section of a composite waveguide,

Fig. 2 is a cross section of a simple embodiment of the optical waveguide according to the present invention comprising a tube member and a transparent material,

Fig. 3 is a cross section of a modification of the waveguide of Fig. 2,

Figs. 4 and 5 are cross sections of two different embodiments of the waveguide according to the present invention,

Fig. 6 is a cross section of a catheter consisting of the waveguide comprising the elongate elements embedded in the wall in the transparent material,

Fig. 7 is a perspective view of a positioning means used for producing the waveguide of Fig. 6,

Figs. 8-12 are cross sections of various embodiments of the waveguide according to the present invention in which at least one elongate element is inserted in a bore made in the wall of the tube member of the waveguide,

Figs. 13-16 are cross sections of further embodiments of the waveguide of the present invention in which the tube member has at least two bores at least one of which is filled with the transparent material but at least one of the rest of which is not filled with the transparent material, and

Figs. 17 and 18 are respectively a cross-section and a lateral view of a catheter comprising a waveguide according to a further embodiment of the invention.

DETAILED DESCRIPTION OF THE INVENTION

According to one aspect of the present invention, there is provided a composite optical waveguide comprising a flexible tube member having at least one continuous bore along at least a part of its length, at least one of which is filled with a transparent elastomeric material serving as an optical waveguide part.

The flexible tube member is made of a comparatively transparent flexible material having a smaller refractive index than that of the transparent material. When the refractive index of the flexible tube member is larger than that of the transparent material, an intermediate layer made of a material having a refractive index smaller than that of the transparent material can be applied on the inner surface of the bore of the flexible tube member in which the transparent material is filled. Preferred examples of the tube member material are a thermoplastic material such as a fluororesin (e.g., tetrafluoroethylene/hexafluoropropylene copolymers, polytetrafluoroethylene and the like), a fluoroelastomer, a silicone elastomer (e.g., polysiloxane elastomers, fluorosilicone elastomers and the like), polychlorotrifluoroethylene, polyvinyl chloride, polyethylene and so forth.

As the transparent material to be filled in the bore, a cured product of a so called liquid elastomer is preferably used. Specific examples of the liquid elastomer are casting liquid polyurethane elastomers, liquid polybutadiene elastomers and liquid silicone elastomers. Among them, preferred are addition reaction type polysiloxane elastomers which are produced by reacting polysiloxane having a functional group of the formula: $CH_2=CHSi\equiv$ and polysiloxane having a functional group of the formula: $HSi\equiv$ in the presence of a platinous catalyst. Particularly, dimethyldiphenylsiloxane copolymer and polymethylphenyl-siloxane elastomer have high refractive indexes may be used. Further, other transparent resins such as polymethyl methacrylate and polystyrene may be used as the transparent material.

For some applications, the composite optical waveguide comprises two or more bores filled with the transparent material.

The tube member should protect the waveguide part made of the transparent material and/or impart mechanical strength to the waveguide. However, a few materials having smaller refractive index than the transparent material listed herein satisfy these requirements. Since the tube member is generally produced by extrusion, flaw and surface roughness present on the inner surface of the tube member adversely affect attenuation of light transmission of the waveguide. Further, in some combinations of the tube member material and the transparent material, adhesion between them is not sufficient. To overcome these defects, an intermediate layer can be provided between the tube member and the transparent material. In addition, when the refractive index of the surface of the elongate element embedded in the transparent elastomeric material is larger than that of said material, or when it is required to improve adhesion between the outer surface of the elongate element and the transparent elastomeric material or to smoothen the flaw or roughness formed on the outer surface of the elongate element during extrusion, the intermediate layer may be applied on the outer surface of the elongate element. The intermediate layer is preferably made of silicone elastomers, fluorosilicone elastomers, polyvinyl acetate, ethylene/vinyl acetate copolymers, polyvinyl acetal, methylcellulose and the like. It is provided between the tube member or the elongate element and the transparent material by coating it on the inner surface of the tube member or the outer surface of the elongate element, or providing a preformed intermediate layer between them.

The cross section of the waveguide of the present invention is preferably a circle although it has any other cross sections so that its external shape forms a plate or a tape.

The bore is used for various purposes. For example, it is used as a conduit for transmitting fluids or containing an image fiber. In some applications, a wire, e.g. an electric wire may be inserted in it.

In one embodiment of the waveguide of the present invention, at least one elongate element is embedded in the transparent material. The outer surface of the elongate element is preferably coated with a fluororesin (e.g., polytetrafluoroethylene) to reduce light absorption.

The waveguide comprising the embedded elongate element may be produced by inserting the elongate element in the bore of the tube member by means of an inserting means, pouring the uncured liquid transparent material in the bore and curing it by a suitable manner for the material. In case of the thermoplastic transparent material, it is heated to be liquefied, poured in the bore and cooled to be hardened.

In other embodiment of the waveguide of the present invention, at least one elongate element is inserted in the bore made in the wall of the tube member.

Now, the present invention will be illustrated by making reference to the attached drawings by way of example.

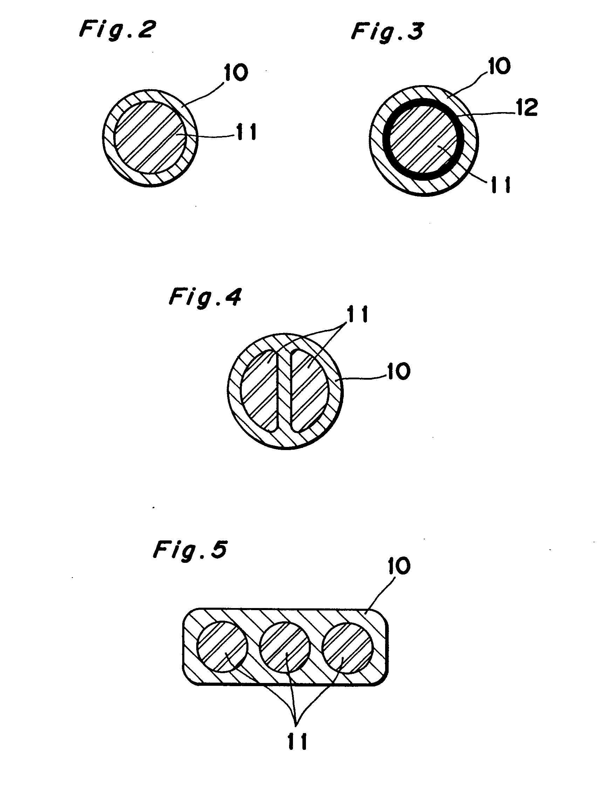

Fig. 2 shows a cross section of a simple embodiment of the optical waveguide of the present invention, which comprises a tube member 10 made of, for example, a tetrafluoroethylene/hexafluoropropylene copolymer (refractive index = about 1.34) and a transparent material 11 made of, for example, an addition reaction type polydimethylsiloxane (refractive index = about 1.41) which is poured and cured in a bore of the tube member and acts as a waveguide part. For example, the waveguide of Fig. 2 comprising a tube member made of tetrafluoroethylene/hexafluoropropylene copolymer and having an inner diameter of 2 mm and cured polydimethylsiloxane as a transparent material has light transmission loss of 0.5 dB/m at a wavelength of 633 nm.

The waveguide of Fig. 2 is conveniently produced by pouring a liquid elastomer into the tube member 10 and curing it.

Fig. 3 shows a cross section of a modification of the waveguide of Fig. 2 including an intermediate layer 12 which is provided on the inner surface of the tube member 10 before the transparent material 11 is poured in the bore of the tube member 10.

Since the waveguide of the present invention comprises flexible materials, it can be bent even when it has a large diameter, and is useful as an illumination means.

Figs. 4 and 5 show cross sections of two different embodiments of the waveguide of the present invention in which the tube member 10 has two and three bores filled with a transparent material 11, respectively.

When the tube member has plural waveguide parts, advantageously light signals having different wavelengths can be simultaneously propagated through the same waveguide. In case of a detecting sensor, incident and emitted light signals are simultaneously propagated.

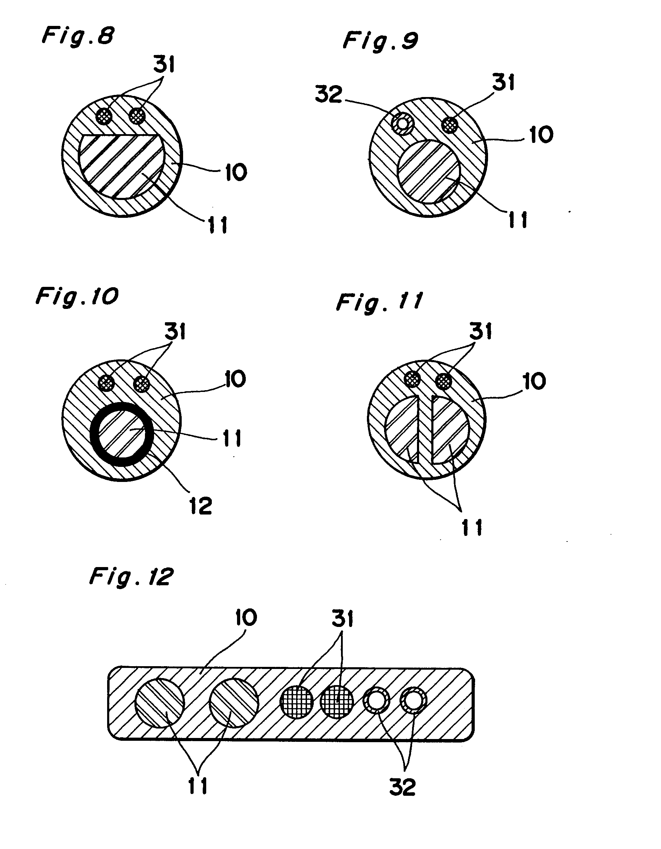

An example of the waveguide comprising the elongate elements embedded in the transparent material is a catheter 20 shown in Fig. 6. The catheter 20 comprises a tube member 21 made of polytetrafluoroethylene, a core 22 made of silicone elastomer as the transparent material. In the core 22, an image fiber 23 and two tubes 24,24' made of polytetrafluoroethylene are embedded. To one end of the catheter 20, a small transparent balloon (not shown) is attached and, in use, it is inflated and pressed against an organ or a blood vessel to exclude blood therefrom so as to enable observation of a tissue. Through one of the polytetrafluoroethylene tubes 24,24' in the core 22, physiologic saline is injected in the balloon and through the other one of the tubes 24,24', air or the physiologic saline is withdrawn. The observation of the tissue is carried out by means of the image fiber 23 by illuminating it with light propagated through the core 22.

The catheter 20 may be produced as follows:

In the tube member 21, the tubes 24,24' and the image fiber 23 which is preferably coated with polytetrafluoroethylene are inserted. The tubes and the image fiber are positioned by installing all the tubes 21 and 24,24' and the image fiber 23 in a positioning means 30 shown in Fig. 7 and slightly tensioned to make them straight. Then, a two-pack silicone elastomer (addition cross linking type) is filled in the tube member 21 through a hole (not shown) made at one end of the tube member 21 and thermally cured.

According to the present invention, an endoscopic catheter without the tubes 24, 24' is also easily produced.

Figs. 8-12 show cross sections of various embodiments of the waveguide of the present invention in which at least one elongate element is inserted in the bore made in the wall of the tube member of the waveguide.

The waveguide of Fig. 8 has a bore filled with the transparent material 11 and two electrical wires 31 embedded in the tube member wall 10. That of Fig. 9 has a bore filled with transparent material 11, an electrical wire 31 and a pipe 32 the latter two being embedded in the tube member wall 10. Fig. 10 is a modification of the waveguide of Fig. 8, which has an intermediate layer 12 between the tube member wall material and the transparent material. Fig. 11 is another modification of the waveguide of Fig. 8, which has two bores filled with the transparent material 11. The waveguide of the present invention may be a plate form as shown in Fig. 12. The elongate element may be embedded in the wall of the tube member during extrusion of the latter. Then, the liquid elastomer is poured in other bore and cured to form the composite optical waveguide.

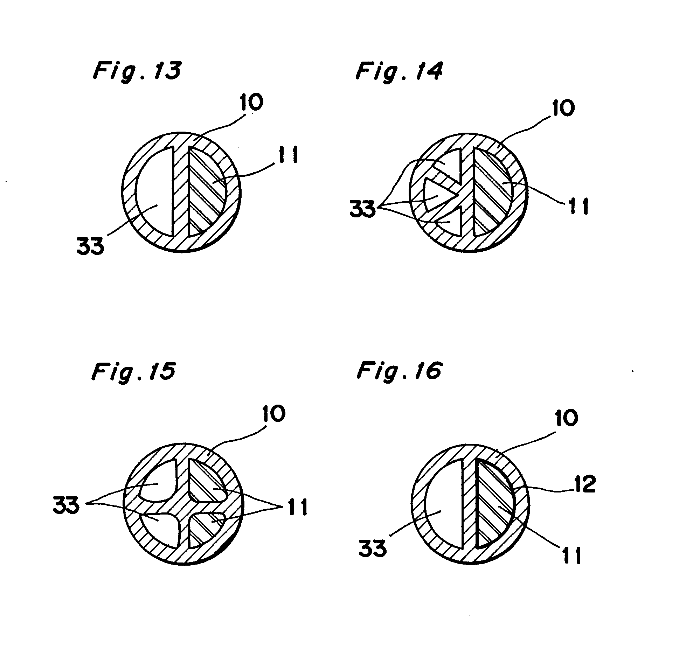

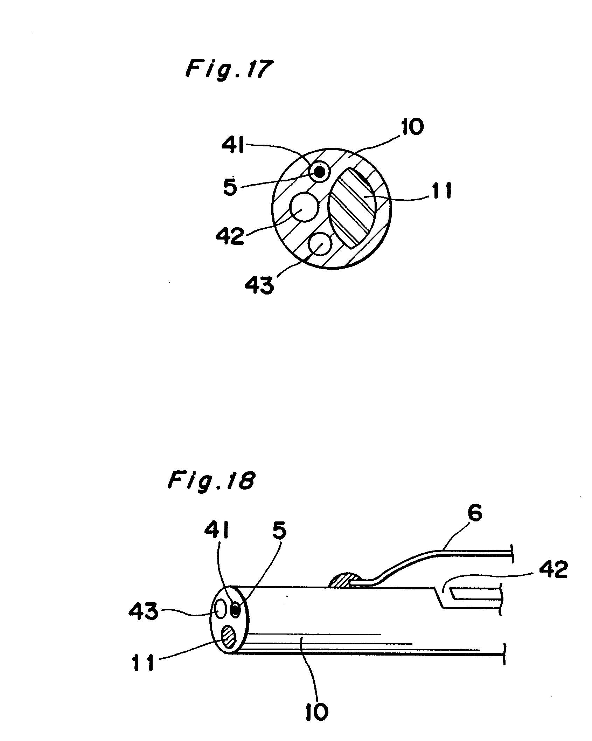

Figs. 13-16 show cross sections of further embodiments of the waveguide of the present invention in which the tube member 10 has at least two bores at least one of which is filled with the transparent material 11 but at least one 33 of the rest of which is not filled with the transparent material. Among them, the waveguide of Fig. 13 has the simplest structure which has two bores one of which is filled with the transparent material but the other one 33 of which is not filled. Fig. 14 shows an embodiment having one bore filled with the transparent material and three bores not filled. Fig. 15 shows an embodiment having two bores filled with the transparent material and two bores not filled. Fig. 16 is a modification of the waveguide of Fig. 13, which has an intermediate layer 12 between the tube member wall material and the transparent material.

Fig. 17 is a cross section of a catheter one end of which is attached with a balloon as shown in Fig. 18. This catheter is used for inspecting the blood vessel interior, and the waveguide part made of the transparent material 11 is connected with a light source (not shown) and serves as a light guide. In the bore 41, an image fiber 5 is inserted, and other two bores 42,43 are used for inflating the balloon and flashing a liquid. The tip of the balloon inflating bore 42 opens in a balloon 6. When the end of the catheter reaches the desired position in the blood vessel, the balloon 6 is inflated by injecting a suitable liquid in the balloon through the bore 42 so that the catheter is fixed in the blood vessel. Blood in the vessel is removed by flashing a suitable liquid such as physiologic saline through the bore 43. The blood vessel interior is illuminated by light propagated through the light guide so that the vessel interior is inspected by means of the image fiber 5.

Claims:

1. A composite optical waveguide characterized by a
flexible tube member (10,21) having at least one continuous bore
along at least a part of its length, at least one of which
is filled with a transparent elastomeric material (11,22) serving as
an optical waveguide part.

2. A composite optical waveguide according to
claim 1, which further comprises at least one elongate
element (23,24,24') embedded in the transparent material (22).

3. A composite optical waveguide according to
claim 2, wherein the outer surface of the elongate element (23)
has a refractive index smaller than that of the transparent
material (22).

4. A composite optical waveguide according to
claim 2, wherein the elongate element is a tube (24,24') or a rod-
like element (23).

5. A composite optical waveguide according to
claim 1, which further comprises at least one elongate
element (31,32) inserted in the bore which is not filled with the
transparent material (11).

6. A composite optical waveguide according to claim 5, wherein the elongate element is a tube (32) or a rod-like element (31).

7. A composite optical waveguide according to claim 1, which further comprises an intermediate layer (12) provided on the inner surface of the bore.

8. A composite optical waveguide according to claim 7, wherein the intermediate layer is made of a material having a refractive index smaller than that of the transparent material.

9. A composite optical waveguide according to claim 1, wherein the transparent material (11) is a cured product of a liquid elastomer.

10. A composite optical waveguide according to claim 9, wherein the liquid elastomer is one selected from a casting liquid polyurethane elastomer, a liquid polybutadiene elastomer and a liquid silicone elastomer.

11. A process for producing a composite optical waveguide according to claim 1, which comprises pouring a liquid elastomer (11) in at least one bore of the tube member (10) and curing it to provide a transparent material.

12. A process according to claim 11, which further comprises coating an intermediate layer (12) on the inner surface of the bore (10) before the liquid elastomer (11) is poured.

13. A process for producing a composite optical waveguide according to claim 2, which comprises inserting at least one elongate element in the bore, pouring a liquid elastomer into the bore and curing it.

14. A process according to claim 13, which further comprises coating an intermediate layer on the inner surface of the bore before the liquid elastomer is poured.

15. A catheter comprising a waveguide according to any one of claims 1 to 10.

**Fig. 1**

**Fig. 6**

**Fig. 7**

**Fig.2**

**Fig.3**

**Fig.4**

**Fig.5**

Fig.8

31

10

11

Fig.9

32

31

10

11

Fig.10

31

10

11

12

Fig.11

31

10

11

Fig.12

10

31

11

32

0173266

**Fig. 13**

**Fig. 14**

**Fig. 15**

**Fig. 16**

0173266

*Fig.17*

*Fig.18*